# EUROPEAN PATENT APPLICATION

(11) **EP 2 990 996 A1**
(43) Date of publication of application: **02.03.2016**
(21) Application number: 15182485.1
(22) Date of filing: 26.08.2015
(51) Int. Cl.: G06K 9/00, G06K 9/20

(54) **PHOTOELECTRON FINGERPRINT IDENTIFYING APPARATUS**

(30) Priority: 26.08.2014 TW 103129359
(71) Applicant: Gingy Technology, Inc., Hsinchu City (TW)
(72) Inventor: HUNG, Chun-Lang, Hsinchu City (TW); WU, Jen-Chieh, Hsinchu City (TW)
(74) Representative: Viering, Jentschura & Partner mbB Patent- und Rechtsanwälte

(57) **Abstract**

A photoelectron fingerprint identifying apparatus is disclosed. The disclosed photoelectron fingerprint identifying apparatus may include a photoelectron sensor having a light receiving surface on which a finger is placed, wherein the photoelectron sensor receives an optical intensity signal associated with an invisible light penetrating the finger before converting the optical intensity signal to a photocurrent signal, an analog/digital converter electrically coupled to the photoelectron sensor for receiving the photocurrent signal, wherein the analog/digital converter converts the photocurrent signal to a digital signal, and an image processing unit electrically coupled to the analog/digital converter for receiving the digital signal before outputting an fingerprint pattern based on the digital signal.

## Description

### BACKGROUND

### 1. Technical Field

The present disclosure relates to a fingerprint identifying apparatus, in particular, to a photoelectron fingerprint identifying apparatus.

### 2. Description of Related Art

Fingerprint recognition, as the name suggests, employs the uniqueness of fingerprint for identifying purpose. One typical fingerprint identifying apparatus generally include a fingerprint sensor for capturing a complete fingerprint image and one fingerprint recognition algorithm for processing the fingerprint image such as extracting the characteristics of the fingerprint. Upon a corresponding fingerprint template is generated, the original fingerprint is abandoned before any comparison of the fingerprint pattern could be performed.

Traditional fingerprint sensor could be either capacitive fingerprint sensor or optical fingerprint sensor. The capacitive fingerprint sensor uses RF capacitive sensing, pressure sensing, or thermal sensing approach to perform the related sensing tasks. A high density of miniaturized pressure sensors or capacitance sensors would be integrated within a chip and upon the finger presses the surface of the chip the internal capacitive sensors according to the distribution of valleys and ridges of the fingerprint produce different charges (or temperature difference), which serve the basis for the formation of the fingerprint image.

Advantages of the capacitive sensors include them being small and thin and therefore the capacitive sensors have been widely used on a handheld device. However, their manufacturing cost and durability still remain to be desired. At the same time, for the capacitive sensors to be pressed the size of the capacitive sensors needs to be taken into account. Thus, the entire wafer has to be cut in order to maintain the size of the capacitive sensors. Furthermore, since the capacitive sensors themselves are exposed semiconductor dies, subjecting to surface erosion and static charges arising out of the sweat and chemicals of the finger. Therefore, the durability and the shelf life of the capacitive sensors may be highly questionable. To solve the above problem, additional sapphire substrates may be laminated onto the surface of the capacitive sensors, which undoubtedly increases the entire manufacturing cost.

In addition, the optical fingerprint sensor could be consisted a light source, a prism mirror, and charge-coupled device (CCD). At the time the finger presses the prism mirror, the valleys and ridges of the fingerprint could absorb and/or destruct the total reflection of the light so that a fingerprint image could be obtained. Such fingerprint image could be further captured and outputted by CCD. As could be seen from above, the optical fingerprint sensors could capture the fingerprint image without having the finger to be in contact with the sensor die (in other words, the area where the finger presses is made of acrylic or glass), which is one major advantage of being cost-effective and durable. Even so, the size of the optical fingerprint sensors and the complexity of assembling the same render difficult the incorporation of the optical fingerprint sensors into the handheld devices.

Therefore, there is difficulty facing people of the ordinary skill in the art when either selecting the conventional capacitive fingerprint sensor or the optical fingerprint sensor as the fingerprint sensor in the fingerprint identifying apparatus. Disadvantages of the conventional capacitive fingerprint sensor and the optical fingerprint sensor have been discussed in above. How to design one fingerprint identifying apparatus subjecting to reduced environment-related impact and of reduced size and less manufacturing cost becomes critical.

### SUMMARY OF THE DISCLOSURE

In order to overcome the aforementioned deficiency associated with the conventional fingerprint sensors, the present disclosure provides a photoelectron fingerprint identifying apparatus with the reduced size and manufacturing cost and subjecting to less of the environment-related impact.

The disclosed photoelectron fingerprint identifying apparatus may include a photoelectron sensor having a light receiving surface on which a finger is placed, wherein the photoelectron sensor receives an optical intensity signal associated with an invisible light penetrating the finger before converting the optical intensity signal to a photocurrent signal, an analog/digital converter electrically coupled to the photoelectron sensor for receiving the photocurrent signal, wherein the analog/digital converter converts the photocurrent signal to a digital signal, and an image processing unit electrically coupled to the analog/digital converter for receiving the digital signal before outputting an fingerprint pattern based on the digital signal.

The present disclosure relies on the photoelectron sensor to receive the invisible light penetrating the finger with such invisible light coming from the ambient light. The above invisible light penetrating the valleys and the ridges may result in different optical intensity signals. The photoelectron sensor may convert the optical intensity signals to the correspondingly different photocurrent signals, which may be further converted by the A/D converter to the corresponding digital signals. The digital signals may reflect the contrast in brightness of the fingerprint to improve the fingerprint recognition.

Because of the characteristics of the photoelectron sensors of being compact, the disclosed photoelectron fingerprint identifying apparatus with the photoelectron sensors could be applied to the handheld devices. And by using the invisible light as the light source for the fingerprint recognition the present disclosure may minimize the environment-related impact on the fingerprint sensors, which is commonplace in the traditional capacitive fingerprint sensors, and could operate without the protection from the sapphire substrate, which could effectively reduce the manufacturing cost.

For further understanding of the present disclosure, reference is made to the following detailed description illustrating the embodiments and examples of the present disclosure. The description is only for illustrating the present disclosure, not for limiting the scope of the claim.

### BRIEF DESCRIPTION OF THE DRAWINGS

The drawings included herein provide further understanding of the present disclosure. A brief introduction of the drawings is as follows:
Fig. 1 shows a simplified block diagram of a photoelectron fingerprint identifying apparatus according to one embodiment of the present disclosure;
Fig. 2 shows a structural diagram of the photoelectron fingerprint identifying apparatus according to one embodiment of the present disclosure in Fig. 1;
Fig. 3 shows a structural diagram of another photoelectron fingerprint identifying apparatus according to another embodiment of the present disclosure; and
Fig. 4 shows a structural diagram of another photoelectron fingerprint identifying apparatus according to another embodiment of the present disclosure.

### DESCRIPTION OF THE EXEMPLARY EMBODIMENTS

The aforementioned and other technical contents, features, and efficacies will be shown in the following detail descriptions of a preferred embodiment corresponding with the reference Figures.

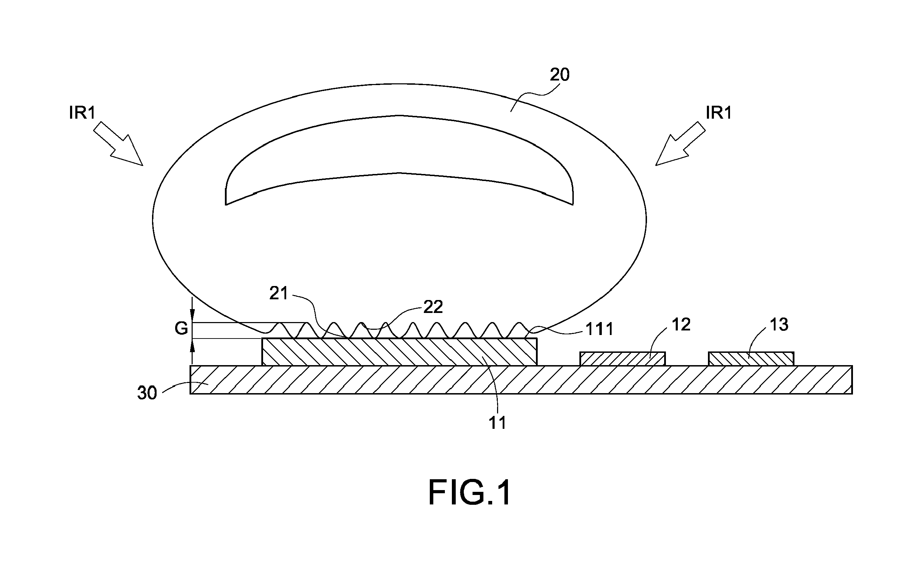

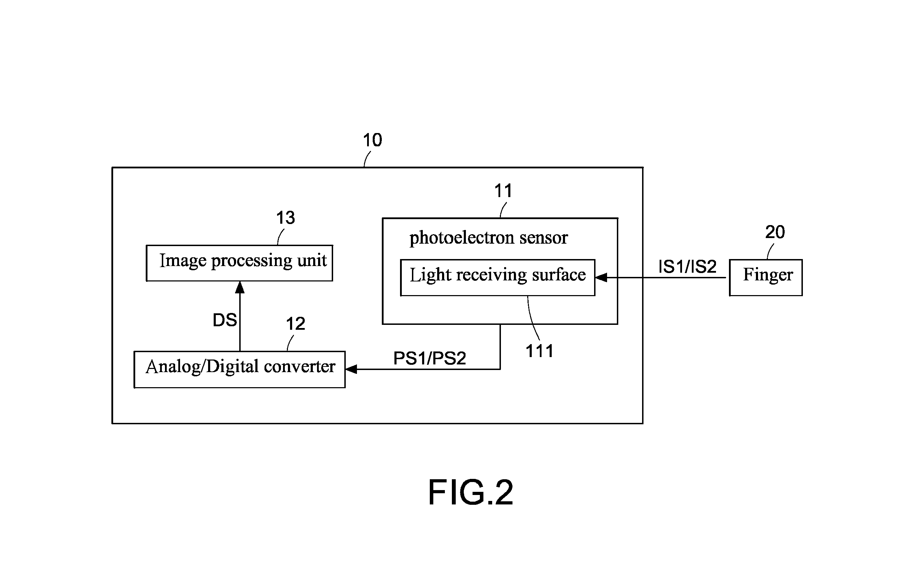

Please refer to Figs. 1 and 2 illustrating a simplified block diagram and a structural diagram of a photoelectron fingerprint identifying apparatus 10 according to one embodiment of the present disclosure, respectively. The photoelectron fingerprint identifying apparatus 10 may include a photoelectron sensor 11, an analog/digital (A/D) converter 12, and an image processing unit 13. The photoelectron sensor 11 may include a light receiving surface 111 on which a finger 20 is placed. The A/D converter 12 may be electrically coupled to the photoelectron sensor 11. The image processing unit 13 may be electrically coupled to the A/D converter 12. In one implementation, a circuit board 30 may be provided to have the photoelectron sensor 11, the A/D converter 12, and the image processing unit 13 disposed thereon. Such arrangement may help facilitate electrical connections between the photoelectron sensor 11, the A/D converter 12, and the image processing unit 13.

At the time the finger 20 presses the light receiving surface 111 of the photoelectron sensor 11, an invisible light IR1 with respect to ambient light may be emitted to the finger 20. In one implementation, the invisible light IR1 may be an infrared radiation ranging between 780nm to 3000nm in wavelength. When the invisible light IR1 penetrates the finger 20, a corresponding scattering light may result. The scattering light may be received by the photoelectron sensor 11, which may generate an optical intensity signal associated with the invisible light penetrating the finger 20. The photoelectron sensor 11 may, depending on the optical intensity signal, convert the optical intensity signal to a corresponding photocurrent signal.

It is worth noting that the finger includes fingerprint valleys 21 and fingerprint ridges 22. When the invisible light IR1 penetrates out of the finger 20 and through the valley 21, the invisible light IR1 may enter onto the light receiving surface 111 since the valley 21 may be in contact with the light receiving surface 111. On the other hand, when the invisible light IR1 penetrates out of the finger 22 and through the ridge 22 some portions of the invisible light may be reflected from the light receiving surface 111 because of the gap G between the light receiving surface 111 and the fingerprint ridge 22. In other words, not all of the invisible light IR1 may enter onto the light receiving surface 111. Accordingly, the intensity associated with the invisible light IR1 penetrating the valley (or a first optical intensity signal IS1) may be larger than the intensity of the invisible light IR1 penetrating the ridge (or a second optical intensity signal IS2).

The photoelectron sensor 11 may receive both the first optical intensity signal IS1 and the second optical intensity signal IS2 at the same time. The photoelectron sensor 11 may convert the received first optical intensity signal IS1 to a corresponding first photocurrent signal PS1 and convert the received second optical intensity signal IS2 to a corresponding second photocurrent signal PS2.

In one implementation, the photoelectron sensor 11 may operate using photovoltaic, photoconductive, or luminous emission conversion. In the photovoltaic conversion, which generally occurs at the junction adjoining two different materials, when the invisible light is emitted on the junction an output voltage associated with the luminance at two ends of the junction may result. The junction may be a P-N junction using semiconductor materials such as silicon, germanium, or indium antimonite. In the photoconductive conversion, the semiconductor materials will be used with the resistance thereof decreasing because of the increase in luminance and the materials therefore become conductive since absorbing the energy of photons to produce electric charge carriers. In the luminance emission conversion, electrons could escape from their original orbits when the input energy is strong enough. Having said that, the implementation of the conversion of the photoelectron sensor 11 may not be limited as the result so long as other conversions could satisfy different needs.

When the photoelectron sensor 11 converts the first optical intensity signal IS1 and the second optical intensity signal IS2 to the first photocurrent signal PS1 and the second photocurrent signal PS2, respectively, the first photocurrent signal PS1 and the second photocurrent signal PS2, both of which may be therefore of different intensity, may be delivered to the A/D converter 12. The A/D converter 12 may convert the first photocurrent signal PS1 and the second photocurrent signal PS2 to their corresponding digital signals DS, which may thereafter be transmitted to the image processing unit 13. The image processing unit 13 may further convert the digital signals DS to a fingerprint pattern.

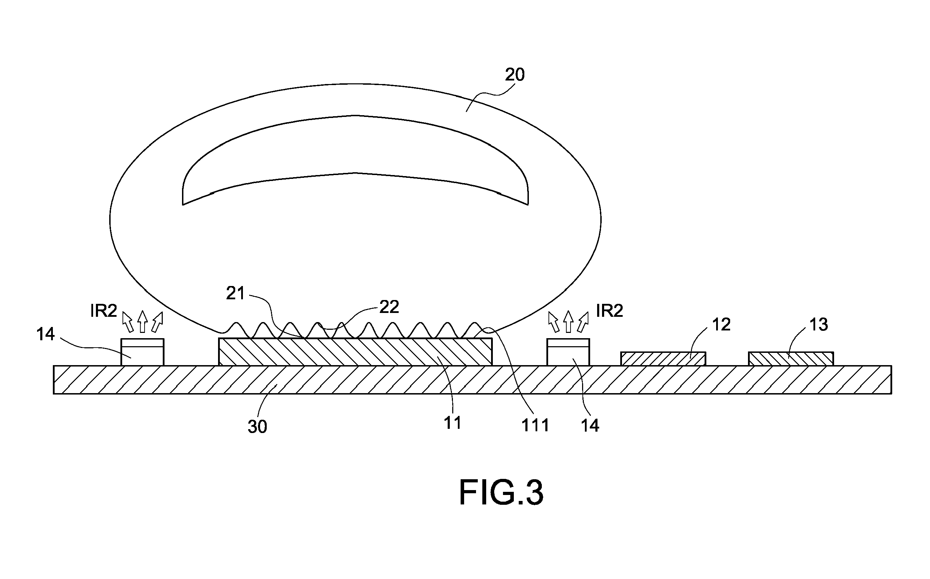

Please refer to Fig. 3 of a structural diagram of another photoelectron fingerprint identifying apparatus according to another embodiment of the present disclosure. One difference of this embodiment from the previous one is described in below.

The photoelectron fingerprint identifying apparatus in this embodiment may further include a light-emitting element 14, which may emit another invisible light IR2 to the finger 20. The invisible light IR2 may penetrate into the finger 20, enhancing the contrast in intensity between the first optical intensity signal IS1 associated with the valley 21 and the second optical intensity signal IS2 associated with the ridge 22. It is worth noting the photoelectron sensor 11 may detect the ambient light and when the invisible light IR1 of the ambient light becomes insufficient the photoelectron sensor 11 may activate the light-emitting element 14 to increase the intensity of the invisible light IR2.

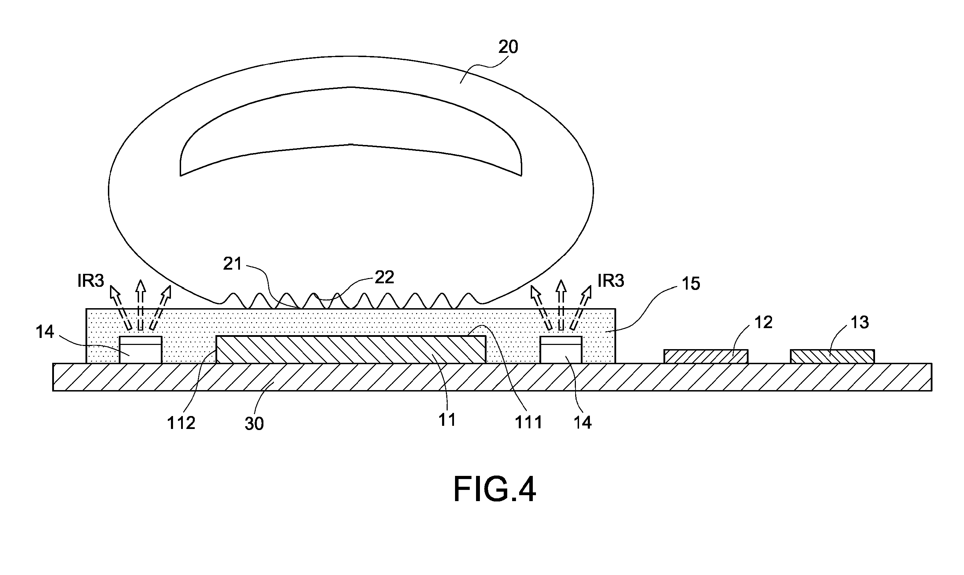

Please refer to Fig. 4 of a structural diagram of another photoelectron fingerprint identifying apparatus according to another embodiment of the present disclosure. One aspect separating this embodiment from the previous ones is present in the subsequent paragraphs.

The photoelectron fingerprint identifying apparatus may include a light-emitting element 14 and a scattering medium 15. The scattering medium 15 may surround the light receiving surface 111 of the photoelectron sensor 11. In another implementation, the scattering medium 15 may surround the light receiving surface 111 and a peripheral of the photoelectron sensor 11. The light-emitting element 14 may correspond to the scattering medium 15. Another invisible light IR3 may enter into the scattering medium 15 through a side surface 112 of the photoelectron sensor 11, allowing for the invisible light IR3 to be uniformly distributed within the scattering medium 15. As such, the scattering medium 15 may be used to uniformly distribute the energy associated with the invisible light IR3 among the area of the finger 20.

When the invisible light IR3 could be uniformly emitted onto the area of the finger 20 by the scattering medium 15, since the valley 21 of the finger 20 may be on contact with the light receiving surface 111 the invisible light IR3 may enter into the photoelectron sensor 11 through the light receiving surface 111. On the other hand, since another gap G may exist between the ridge 22 and the light receiving surface 111 not the entire invisible light IR3 penetrating out of the ridge 22 may enter into the photoelectron sensor 11. Specifically, certain invisible light IR3 penetrating out of the ridge 22 may be reflected by the light receiving surface 111. Thus, the contrast between the ridge 22 and the valley 21 may enhance.

The disclosed photoelectron fingerprint identifying apparatus may rely on the photoelectron sensor to receive the invisible light penetrating the finger and employ the difference in the signal intensity existing between the optical signal associated with the ridge and its counterpart associated with the valley to convert those optical intensity signals into their corresponding photocurrent signals of distinct intensity as well by the above-mentioned photoelectron sensor. The A/D converter may then convert the photocurrent signals of different intensity into the corresponding digital signals, which may be used for the output of the fingerprint pattern having sufficient contrast in brightness, improving the recognition rate of the fingerprint. Further, due to the characteristics of the photoelectron sensor (being compact) the present disclosure may be utilized in handheld devices, rendering less cumbersome the incorporation of the fingerprint identifying apparatus into the handheld devices. Meanwhile, the fingerprint recognition according to the present disclosure may be based on the invisible light penetrating the finger, solving the problem of the traditional capacitive fingerprint identifying apparatus being susceptible to the environmental static charges and further eliminating the need of the protection using sapphire substrate to reduce the manufacturing cost.

Some modifications of these examples, as well as other possibilities will, on reading or having read this description, or having comprehended these examples, will occur to those skilled in the art. Such modifications and variations are comprehended within this disclosure as described here and claimed below. The description above illustrates only a relative few specific embodiments and examples of the present disclosure. The present disclosure, indeed, does include various modifications and variations made to the structures and operations described herein, which still fall within the scope of the present disclosure as defined in the following claims.

## Claims

1. An photoelectron fingerprint identifying apparatus, comprising:
a photoelectron sensor having a light receiving surface on which a finger is placed, wherein the photoelectron sensor receives an optical intensity signal associated with an invisible light penetrating the finger before converting the optical intensity signal to a photocurrent signal;
an analog/digital converter electrically coupled to the photoelectron sensor for receiving the photocurrent signal, wherein the analog/digital converter converts the photocurrent signal to a digital signal; and
an image processing unit electrically coupled to the analog/digital converter for receiving the digital signal before outputting a fingerprint pattern based on the digital signal.

2. The fingerprint identifying apparatus according to claim 1, wherein the light receiving surface is in contact with a valley of the finger, the photoelectron sensor receives a first optical intensity signal associated with the invisible light penetrating the valley, a first gap is formed between the light receiving surface and the valley, a second gap is formed between the light receiving surface and a ridge of the finger, the photoelectron sensor receives a second optical intensity signal associated with the invisible light penetrating the ridge, and the first optical intensity signal is larger than the second optical intensity signal in amplitude.

3. The fingerprint identifying apparatus according to claim 1, further comprising a light-emitting element for emitting the invisible light to the finger.

4. The fingerprint identifying apparatus according to claim 1, further comprising a light-emitting element and a scattering medium surrounding the light receiving surface of the photoelectron sensor allowing for the finger to be in contact with the scattering medium, wherein the light-emitting element emits the invisible light to the scattering medium.

5. The fingerprint identifying apparatus according to claim 4, wherein the scattering medium surrounds the peripheral of the photoelectron sensor.
